# FASCICULE DE BREVET EUROPEEN

(11) **EP 1 819 543 B1**
(45) Date de publication et mention de la délivrance du brevet: **04.04.2012**
(21) Numéro de dépôt: 05824246.2
(22) Date de dépôt: 02.12.2005
(51) Int. Cl.: B60J 5/04

(54) **RAIDISSEUR DE PANNEAU DE PORTE**
TÜRPLATTENVERSTEIFER
DOOR PANEL STIFFENER

(30) Priorité: 03.12.2004 FR 0452860
(43) Date de publication de la demande: 22.08.2007
(73) Titulaire: Renault s.a.s., 92100 Boulogne Billancourt (FR)
(72) Inventeur: MACQUAIRE, Bruno, F-91190 Gif Sur Yvette (FR); TETU, Yvon, F-92250 La Garenne Colombes (FR); ZANOLIN, Dominique, F-78150 Le Chesnay (FR)
(74) Mandataire: Rougemont, Bernard
(86) Numéro de dépôt international: PCT/FR2005/051028
(87) Numéro de publication internationale: WO 2006/059048

(56) Documents cités:
- EP-A- 1 046 772
- EP-A- 1 086 840
- WO-A-03/059670
- US-A- 5 417 470
- US-A- 6 135 537
- US-A- 6 148 564
- US-B1- 6 510 657

## Description

### DOMAINE TECHNIQUE

L'invention se rapporte au domaine des portes de véhicules automobiles et aux contraintes qui déterminent leur structure interne.

Plus particulièrement, l'invention concerne la rigidité des portes, et a pour objet un système de renforcement interne permettant d'optimiser le rapport entre la raideur de la porte et sa flexibilité.

### ÉTAT DE LA TECHNIQUE ANTÉRIEURE

Les portes de véhicule automobile, principalement les portes latérales permettant l'accès des passagers aux sièges, comprennent de nombreux éléments fonctionnels et ont une structure habituellement « en caisson ». Les portes comprennent ainsi de façon usuelle un caisson intérieur de structure complexe et auquel sont couplés les éléments fonctionnels, recouvert par un panneau interne, habituellement en matière plastique, et un panneau externe, habituellement en tôle, formant son habillage.

Parmi les éléments fonctionnels et pour des objectifs de sécurité, les portes de véhicule peuvent être munies d'un « poussoir de bassin » dans le caisson du côté intérieur, vers les passagers, qui permet de protéger les occupants du véhicule en cas de choc latéral. La porte est également habituellement munie d'un renfort latéral, sous la forme sensiblement d'une barre transversale centrale rigide. Le renfort latéral permet accessoirement de diminuer les risques d'intrusion dans le véhicule. Une structure de porte connue est par exemple décrite dans le document EP-A-1 129 874.

Le poids est par ailleurs un facteur déterminant dans la construction automobile, et le panneau externe de porte est en tôle la moins épaisse possible. Sous un aspect, le fait d'être relativement déformable autorise le phénomène connu sous le nom de « cloquage », c'est-à-dire une réponse élastique locale tolérant de petits enfoncements sans altération de la carrosserie. Sous un autre aspect cependant, si les tôles utilisées sont trop fines et légères, il arrive que lors d'appuis sur les portes ou de petits chocs, le panneau externe ne résiste pas suffisamment et sorte de sa zone de déformation élastique. Outre des inconvénients esthétiques, une mauvaise résistance aux chocs et les déformations consécutives de la carrosserie entachent la sécurité du véhicule.

### EXPOSÉ DE L'INVENTION

L'invention se propose de pallier les inconvénients précédents et d'assurer une raideur suffisante à la partie extérieure des portes de véhicule tout en permettant l'utilisation de tôles fines et légères pour les panneaux externes.

L'invention se propose en particulier d'adapter les éléments de type « poussoir de bassin » pour rigidifier une porte et pour assurer la sécurité de la structure en caisson.

Sous l'un de ses aspects, l'invention concerne une structure de porte en caisson qui comprend un raidisseur central. Avantageusement, le raidisseur est localisé au niveau des sièges du véhicule dans une porte latérale. En effet, les appuis sur les portes sont effectués notamment à ce niveau, et cet endroit est important pour la sécurité des passagers du véhicule.

Le raidisseur est sous forme d'une plaque, de préférence d'une tôle, de forme quadrilatérale bombée : le raidisseur comprend deux parties d'extrémité situées sur un premier plan courbe, et encadrant une partie centrale formant sensiblement un deuxième plan courbe décalé par rapport au premier. La partie centrale est localisée de façon adjacente au panneau externe de la porte, et y est de préférence solidarisée par l'intermédiaire d'une liaison souple, par exemple un collage ou un masticage. De cette façon, le renfort central permet de doubler le panneau externe et d'en augmenter localement l'épaisseur afin de résister aux appuis, tout en permettant de bonnes performances en termes de cloquage.

Les deux parties d'extrémité du raidisseur sont solidarisées au caisson de la porte afin de rigidifier la structure dans son ensemble.

De préférence, une partie d'extrémité du raidisseur est couplée, par exemple par soudure, à un renfort latéral, par exemple à un renfort anti-intrusion, lui-même solidarisé au caisson, de préférence par soudure.

Une autre partie d'extrémité du raidisseur peut avantageusement être couplée à un autre renfort transversal, lui aussi solidarisé au caisson de la porte.

Les deux renforts peuvent être reliés, de façon souple, notamment par collage, au panneau externe également.

Sous un autre aspect, l'invention concerne un élément de renforcement destiné à augmenter la raideur d'une porte de véhicule tel que présenté plus haut. En particulier, l'élément de renforcement comprend un raidisseur central associé à au moins un renfort transversal.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1A montre un caisson et la figure 1B un panneau externe destinés à une porte comprenant un système de renforcement selon l'invention.
Les figures 2A, 2B, 2C sont des coupes schématiques d'une porte selon un mode de réalisation préféré de l'invention le long des axes AA (A'A'), BB, CC représentés à la figure 1A.

### EXPOSÉ DÉTAILLÉ DE MODES DE RÉALISATION PARTICULIERS

La description qui suit se rapporte à une porte latérale avant d'un véhicule automobile. Toutefois, il est clair que le système de raidisseur selon l'invention peut être utilisé pour une porte latérale arrière, voire pour une porte de coffre si la structure en caisson y est adoptée.

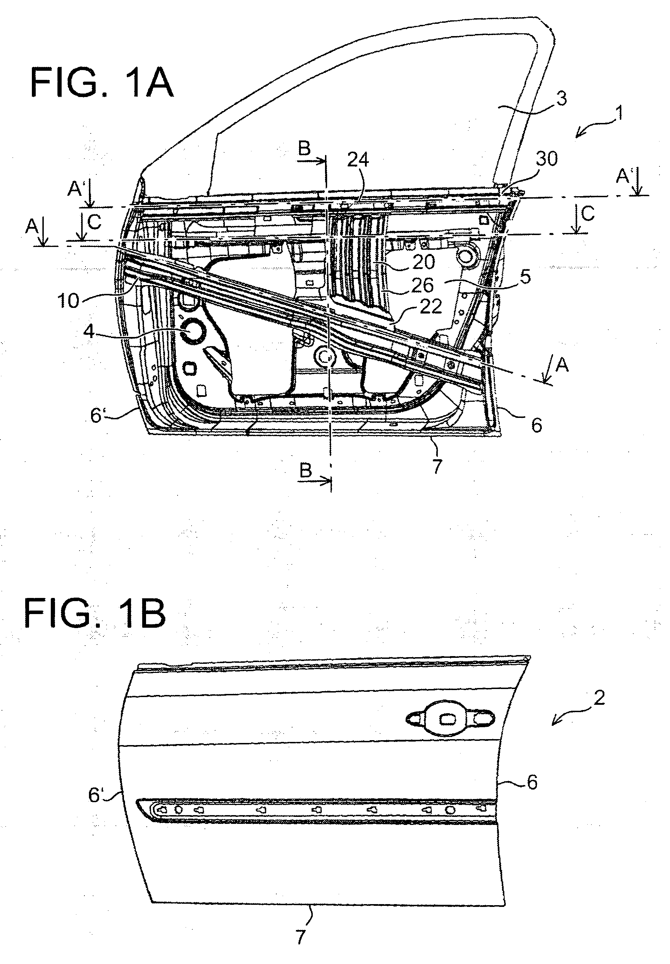

Tel que partiellement montré sur les figures 1A et 1B, une porte de véhicule automobile utilisant le système de renforcement selon l'invention comprend un caisson central 1 recouvert par un panneau externe 2 et un panneau interne (non représenté).

La structure intérieure du caisson 1 dépend des différents éléments fonctionnels que l'on souhaite y intégrer : en particulier, en présence d'une vitre 3 mobile, le caisson 1 possède une forme générale en U dans les branches duquel cette vitre 3 peut être rétractée. Par ailleurs, des aménagements 4 peuvent être mis en place pour intégrer les connexions électriques ou boîtiers de commande électronique par exemple. Des évidements 5 sont également créés afin d'alléger le poids du caisson 1, habituellement en acier ou en aluminium.

Le caisson 1, tout comme les panneaux interne et externe 2, ont une forme définissant celle de la porte finale. En particulier, ils comprennent deux côtés latéraux 6, 6' et un côté inférieur, ou de bas de caisse, 7. Le panneau externe 2, habituellement en tôle d'acier ou d'aluminium, est solidarisé au caisson 1 par sertissage et/ou collage, en particulier le long des côtés 6, 6', 7.

Afin de renforcer latéralement la porte et pour diminuer les risques d'intrusion dans le véhicule (par exemple par découpage du panneau externe 2 au niveau des évidements 5), un renfort latéral 10 est positionné transversalement par rapport à la porte. Le renfort latéral 10, ou renfort anti-intrusion, est un élément de forme longitudinale, habituellement en acier ou en aluminium, dont l'épaisseur et la largeur sont déterminées en fonction des contraintes de poids et de sécurité. Le renfort anti-intrusion 10 peut être positionné parallèlement au côté inférieur 7 de la porte, mais avantageusement, il est oblique, voire diagonal au panneau externe 2, afin d'augmenter la surface protégée.

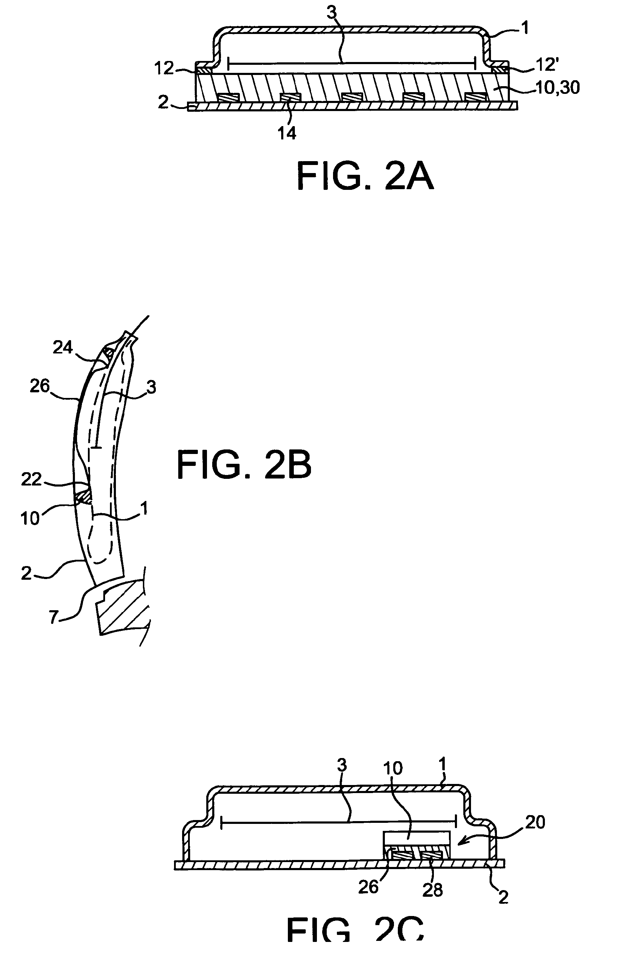

Le renfort anti-intrusion 10 est positionné du côté de la porte extérieur à la vitre 3, c'est-à-dire adjacent au panneau externe 2 : voir figure 2A. Le renfort latéral 10 est solidarisé au caisson 1 de manière rigide, par exemple par soudure, avantageusement en la plupart des points de contact 12, 12' entre la structure du caisson 1 et le renfort 10.

De préférence, le renfort anti-intrusion 10 est également solidarisé avec le panneau externe 2 afin de limiter un déplacement intempestif de ce dernier et de diminuer les contraintes sur les jonctions. La liaison est dans ce cas dite « souple », c'est-à-dire qu'un léger jeu, par exemple de l'ordre de quelques millimètres (de 1 à 5 mm), est conservé entre le renfort 10 et le panneau 2 entre les points de connexion 14, qui peuvent être des points de collage ou de masticage.

Malgré la présence du renfort latéral 10, une grande partie du panneau externe 2 reste sous la forme d'une tôle d'épaisseur fine, par exemple inférieure au millimètre, comme de l'ordre de 0,7 mm, indépendante de toute solidarisation et espacée de tout autre élément. En particulier, la région localisée au niveau du siège conducteur ou passager, sur laquelle les appuis extérieurs sont fréquents, n'est pas renforcée.

Afin d'optimiser (c'est-à-dire diminuer) l'épaisseur de la tôle du panneau externe 2, selon l'invention, il est proposé de le rigidifier localement. A cette fin, un élément raidisseur de type poussoir de bassin 20 est utilisé.

Le raidisseur central 20 se présente sous la forme d'une plaque de forme générale quadrilatérale comprenant deux parties d'extrémité 22, 24 et une partie centrale 26. Ses dimensions dépendent ici encore du modèle de véhicule et de la structure du caisson 1, mais avantageusement, il couvre la zone d'appui principal contre les portes de véhicules qui joue par ailleurs un rôle primordial pour la sécurité, c'est-à-dire la zone localisée en face des sièges. Par exemple, il peut s'agir d'une plaque en acier, en aluminium ou en matériau thermo-élasto-plastique, d'épaisseur environ de 1 à 5 mm et de longueur de côté comprise entre 50 et 600 mm.

La plaque, outre le fait qu'elle soit bombée de façon à s'adapter à la forme de la porte, est avantageusement déformée en son centre : la partie centrale 26 définit un plan, de préférence plus ou moins courbe, qui est décalé par rapport à un deuxième plan, lui aussi habituellement plus ou moins courbe, défini par les deux parties d'extrémité 22, 24 : voir figure 2B. Le décalage entre les deux plans dépend de l'épaisseur de la plaque 20, de la forme de la porte, et de l'agencement du caisson, entre autres. En effet, le raidisseur central 20 est solidarisé à une de ses parties d'extrémité 22 au caisson, directement ou non. Avantageusement, la partie d'extrémité 22 est connectée au renfort latéral 10, de façon fixe, par exemple par soudage.

La partie centrale 26 du raidisseur central 10 épouse quant à elle la forme du panneau externe 2, et y est adjacente ; au contraire du poussoir de bassin connu, le raidisseur central 20 selon l'invention est localisé à l'extérieur de la vitre 3. Afin de permettre le cloquage du panneau externe 2, un jeu de l'ordre de 1 à 5 mm est conservé entre les deux éléments 2, 26. De préférence, la partie centrale 26 est également solidarisée par une liaison souple telle que définie précédemment au panneau externe 2, c'est-à-dire que des points discrets de colle ou de mastic 28 les relient (figure 2C).

La deuxième partie d'extrémité 24 du raidisseur central 20 est quant à elle également solidarisée au caisson 1. De préférence, la solidarisation est ici aussi indirecte : un deuxième renfort latéral supérieur 30, aussi appelé renfort de ceinture, peut être prévu, de façon symétrique au renfort anti-intrusion 10.

Par exemple, le deuxième renfort latéral 30 peut être solidarisé, notamment par soudure, au caisson 1 de façon transversale entre les côtés latéraux 6, 6', et de préférence au niveau du caisson juste en dessous et à l'extérieur de la vitre 3. Il peut s'agir ici aussi d'une barre longitudinale en acier ou en aluminium. Selon un mode de réalisation préféré, la deuxième partie d'extrémité 24 du raidisseur central 20 est reliée, avantageusement par soudure, au deuxième renfort latéral 30.

On note que les deux renforts latéraux 10, 30 jouent un rôle symétrique (de fait, les coupes selon AA ou A'A' peuvent être schématisées par la même figure 2A), et qu'il est possible inversement de fixer le raidisseur central 20 uniquement au renfort de ceinture 30, voire de ne même pas avoir de renfort anti-intrusion 10.

Selon l'invention, lors d'un choc latéral F schématisé en figure 2B, le panneau externe 2, quoique peu épais, est localement renforcé au niveau des passagers par la partie centrale 26 du raidisseur 20. En raison de sa structure, le choc F peut être amorti par déformation locale du raidisseur central 20, qui par ailleurs peut reprendre ses forme et position initiales grâce à sa géométrie et ses connexions d'extrémité au caisson 1.

Il est possible en outre de prévoir que les zones de préhension, et notamment la poignée de la porte, soient localisées dans une zone du panneau externe 2 où le raidisseur central 20 est présent.

Il est donc possible de conserver un panneau externe 2 léger et fin tout en protégeant les occupants du véhicule en cas de choc latéral. De plus, la raideur de la partie extérieure de la porte est augmentée, tout en conservant une élasticité suffisante pour permettre le cloquage : la robustesse du véhicule est améliorée.

## Revendications

1. Elément de renforcement (10, 20) d'une porte de véhicule automobile comprenant un renfort latéral (10) de forme longitudinale destiné à être solidarisé à la porte transversalement entre ses deux côtés latéraux (6, 6'), **caractérisé en ce qu'**il comprend un raidisseur central (20) sous la forme d'une plaque sensiblement quadrilatérale comprenant une première et une deuxième parties d'extrémité (22, 24), le renfort latéral (10) étant solidarisé à la première partie d'extrémité (22) du raidisseur central (20).

2. Elément de renforcement selon la revendication 1 dans lequel le raidisseur central (20) comprend une partie centrale (26) entre les première et deuxième parties d'extrémité (22, 24), et dans lequel la partie centrale (26) est sensiblement sous la forme d'un premier plan courbe qui est décalé par rapport à un deuxième plan formé par les première et deuxième parties d'extrémité (22, 24).

3. Elément de renforcement selon la revendication 1 ou 2 comprenant en outre un deuxième renfort latéral (30) de forme longitudinale destiné à être solidarisé à la porte transversalement entre ses deux côtés latéraux (6, 6').

4. Elément de renforcement selon la revendication 3 dans lequel le deuxième renfort latéral (30) est solidarisé à la deuxième partie d'extrémité (24) du raidisseur central (20).

5. Structure de porte de véhicule automobile comprenant un caisson de porte (1) et un panneau externe (2), **caractérisée en ce qu'**elle comprend un raidisseur central (20) sous la forme d'une plaque sensiblement quadrilatérale comprenant une première et une deuxième parties d'extrémité (22, 24) et une partie centrale (26), la partie centrale (26) étant solidarisée au panneau externe (2) et les deux parties d'extrémité (22, 24) étant solidarisées au caisson (1).

6. Structure de porte selon la revendication 5 dans laquelle la partie centrale (26) du raidisseur central (20) est solidarisée au panneau externe (2) par adhésion souple.

7. Structure de porte selon la revendication 5 ou 6 dans laquelle le raidisseur central (20) fait partie d'un élément de renforcement selon l'une des revendications 1 à 4.

8. Structure de porte selon la revendication 7 dans laquelle au moins un renfort latéral (10, 30) est solidarisé au caisson (1) par soudure.

9. Structure de porte selon l'une des revendications 5 à 8 destinée à une porte latérale de véhicule, et dans laquelle le raidisseur central (20) est localisé au niveau d'un siège du véhicule.

## Claims

1. Reinforcing element (10, 20) for a motor vehicle door comprising a side reinforcement (10) of longitudinal shape intended to be connected to the door transversely between its two lateral sides (6, 6'), **characterized in that** it comprises a central stiffener (20) in the form of a generally quadrilateral plate comprising first and second end portions (22, 24), the side reinforcement (10) being connected to the first end portion (22) of the central stiffener (20).

2. Reinforcing element according to Claim 1, in which the central stiffener (20) comprises a central portion (26) between the first and second end portions (22, 24), and in which the central portion (26) is generally in the form of a first curved plane which is offset in relation to a second plane formed by the first and second end portions (22, 24).

3. Reinforcing element according to Claim 1 or 2, comprising in addition a second side reinforcement (30) of longitudinal shape intended to be connected to the door transversely between its two lateral sides (6, 6').

4. Reinforcing element according to Claim 3, in which the second side reinforcement (30) is connected to the second end portion (24) of the central stiffener (20).

5. Motor vehicle door structure comprising a door shell (1) and an external panel (2), **characterized in that** it comprises a central stiffener (20) in the form of a generally quadrilateral plate comprising first and second end portions (22, 24) and a central portion (26), the central portion (26) being connected to the external panel (2) and the two end portions (22, 24) being connected to the shell (1).

6. Door structure according to Claim 5, in which the central portion (26) of the central stiffener (20) is connected to the external panel (2) by flexible adhesion.

7. Door structure according to Claim 5 or 6, in which the central stiffener (20) is part of a reinforcing element according to one of Claims 1 to 4.

8. Door structure according to Claim 7, in which at least one side reinforcement (10, 30) is connected to the shell (1) by welding.

9. Door structure according to one of Claims 5 to 8, intended for a vehicle side door, and in which the central stiffener (20) is located at the level of a seat of the vehicle.

## Patentansprüche

1. Verstärkungselement (10, 20) einer Kraftfahrzeugtür, das eine Seitenverstärkung (10) länglicher Form enthält, die dazu bestimmt ist, mit der Tür quer zwischen ihren beiden seitlichen Rändern (6, 6') fest verbunden zu werden, **dadurch gekennzeichnet, dass** es eine zentrale Versteifung (20) in Form einer im Wesentlichen vierseitigen Platte enthält, die einen ersten und einen zweiten Endbereich (22, 24) enthält, wobei die Seitenverstärkung (10) fest mit dem ersten Endbereich (22) der zentralen Versteifung (20) verbunden ist.

2. Verstärkungselement nach Anspruch 1, bei dem die zentrale Versteifung (20) einen zentralen Bereich (26) zwischen dem ersten und dem zweiten Endbereich (22, 24) enthält, und bei dem der zentrale Bereich (26) im Wesentlichen die Form einer ersten gekrümmten Ebene hat, die bezüglich einer zweiten Ebene versetzt ist, die von dem ersten und dem zweiten Endbereich (22, 24) geformt wird.

3. Verstärkungselement nach Anspruch 1 oder 2, das weiter eine zweite Seitenverstärkung (30) länglicher Form enthält, die dazu bestimmt ist, mit der Tür quer zwischen ihren beiden seitlichen Rändern (6, 6') fest verbunden zu werden.

4. Verstärkungselement nach Anspruch 3, bei dem die zweite Seitenverstärkung (30) fest mit dem zweiten Endbereich (24) der zentralen Versteifung (20) verbunden ist.

5. Türaufbau eines Kraftfahrzeugs, der einen Türkasten (1) und eine Außenplatte (2) enthält, **dadurch gekennzeichnet, dass** er eine zentrale Versteifung (20) in Form einer im Wesentlichen vierseitigen Platte enthält, die einen ersten und einen zweiten Endbereich (22, 24) und einen zentralen Bereich (26) enthält, wobei der zentrale Bereich (26) fest mit der Außenplatte (2) verbunden ist und die zwei Endbereiche (22, 24) fest mit dem Kasten (1) verbunden sind.

6. Türaufbau nach Anspruch 5, bei dem der zentrale Bereich (26) der zentralen Versteifung (20) durch elastisches Haften fest mit der Außenplatte (2) verbunden ist.

7. Türaufbau nach Anspruch 5 oder 6, bei dem die zentrale Versteifung (20) Teil eines Verstärkungselements nach einem der Ansprüche 1 bis 4 ist.

8. Türaufbau nach Anspruch 7, bei dem mindestens eine Seitenverstärkung (10, 30) durch Schweißen fest mit dem Kasten (1) verbunden ist.

9. Türaufbau nach einem der Ansprüche 5 bis 8, der für eine Seitentür eines Fahrzeugs bestimmt ist und bei dem die zentrale Versteifung (20) sich im Bereich eines Sitzes des Fahrzeugs befindet.
